# EUROPÄISCHE PATENTSCHRIFT

(11) **EP 1 163 062 B1**
(45) Veröffentlichungstag und Bekanntmachung des Hinweises auf die Patenterteilung: **13.11.2002**
(21) Anmeldenummer: 00920409.0
(22) Anmeldetag: 22.03.2000
(51) Int. Cl.: B21B 37/58, B21B 38/08

(54) **VERFAHREN UND EINRICHTUNG ZUR BESTIMMUNG DER WALZKRAFT IN EINEM WALZGERÜST**
METHOD AND DEVICE FOR DETECTING THE ROLL FORCE IN A ROLLING STAND
PROCEDE ET DISPOSITIF POUR DETERMINER LA FORCE DE LAMINAGE DANS UNE CAGE DE LAMINOIR

(30) Priorität: 23.03.1999 DE 19913126; 30.06.1999 DE 19930124
(43) Veröffentlichungstag der Anmeldung: 19.12.2001
(73) Patentinhaber: SIEMENS AKTIENGESELLSCHAFT, 80333 München (DE)
(72) Erfinder: POPPE, Thomas, D-80689 München (DE); FELDKELLER, Björn, D-81737 München (DE); PEUKER, Thomas, D-91052 Erlangen (DE); BRÖSE, Einar, D-91056 Erlangen (DE)
(86) Internationale Anmeldenummer: DE0000887
(87) Internationale Veröffentlichungsnummer: WO00056477

(56) Entgegenhaltungen:
- DE-A- 4 338 607
- DE-A- 19 727 821
- DE-A- 19 728 979

## Beschreibung

Die Erfindung betrifft ein Verfahren bzw. eine Einrichtung zur Bestimmung der Walzkraft in einem Walzgerüst zum Walzen von metallischem Walzgut, wobei die Bestimmung der Walzkraft mittels zumindest eines neuronalen Netzes erfolgt, das mit, insbesondere gemessenen, Werten für die Walzkraft unter unterschiedlichen Betriebsbedingungen im Sinne einer Verbesserung bei der Bestimmung der Walzkraft trainiert wird.

Die Bestimmung der Walzkraft mittels eines Walzkraftmodells, das ein neuronales Netz aufweist, ist bekannt. In der DE 197 27 821 A1 wird ein Verfahren und eine Einrichtung zur Steuerung und/oder Voreinstellung eines Walzgerüstes bzw. einer Walzstraße in Abhängigkeit zumindest der Walzkraft beschrieben, wobei die Walzkraft mittels eines Walzkraftmodells bestimmt wird und wobei zumindest ein neuronales Netz zum Einsatz kommt. Um die Modellgüte des Walzkraftmodells zu verbessern, wird das neuronale Netz im Betrieb einer Walzstraße, für deren Steuerung es vorgesehen ist, trainiert. Dabei ist unter Modellgüte die Abweichung zwischen tatsächlicher Walzkraft und der mittels des Walzkraftmodells bestimmten Walzkraft zu verstehen. Zum Erreichen einer hohen Modellgüte soll diese Abweichung möglichst gering über die gesamte Palette der mittels des Walzgerüstes zu walzenden Metalle sein.

Davon ausgehend ist es Aufgabe der Erfindung, die Genauigkeit bei der Bestimmung der Walzkraft in einem Walzgerüst zum Walzen von metallischen Walzgut gegenüber dem bekannten Verfahren zu erhöhen.

Die Aufgabe wird erfindungsgemäß durch ein Verfahren gemäß Anspruch 1 bzw. eine Einrichtung gemäß Anspruch 13 gelöst.

Weiterbildungen sind in den jeweils abhängigen Ansprüchen angegeben.

Bei der Erfindung erfolgt die Bestimmung der Walzkraft in einem Walzgerüst zum Walzen von metallischen Walzgut mittels zumindest eines neuronalen Netzes, das mit, insbesondere gemessenen, Werten für die Walzkraft unter unterschiedlichen Betriebsbedingungen im Sinne einer Verbesserung bei der Bestimmung der Walzkraft trainiert wird. Vorteilhafterweise wird dabei das neuronale Netz mit Werten für die Walzkraft und Werten für die unterschiedlichen Betriebsbedingungen für Walzgerüste unterschiedlicher Walzstraßen trainiert.

Obwohl bei bekannten Verfahren zur Bestimmung der Walzkraft in einem Walzgerüst mit einem neuronalen Netz dieses durch Training speziell an das Walzgerüst angepaßt wird, führt die Erfindung zu einer präziseren Bestimmung der Walzkraft für das Walzgerüst über die gesamte Palette der mittels des Walzgerüstes zu walzenden Metalle betrachtet. Unter Betriebsbedingungen sind z.B. die Breite des mittels des Walzgerüsts zu walzenden metallischen Walzguts vor Einlauf in das Walzgerüst, die Dicke des metallischen Walzguts vor Eintritt in das Walzgerüst, die relative Dickenreduktion des metallischen Walzguts im Walzgerüst, die Temperatur des metallischen Walzguts bei Eintritt in das Walzgerüst, der Zug im metallischen Walzgut vor dem Walzgerüst, der Zug im metallischen Walzgut hinter dem Walzgerüst sowie der Radius der Arbeitswalzen des Walzgerüstes sowie die Anteile von Eisen, Kohlenstoff, Silicium, Mangan, Phosphor, Schwefel, Aluminium, Chrom, Kupfer, Molybdän, Titan, Nickel, Vanadium, Niob, Stickstoff, Bor und/oder Zinn im metallischen Walzgut und ggf. das Elastizitätsmodul der Walzen zu verstehen.

In vorteilhafter Ausgestaltung der Erfindung wird das neuronale Netz mit Werten für die Walzkraft und Werten für die unterschiedlichen Betriebsbedingungen für zumindest ein Walzgerüst aus einer Vorstraße und zumindest für ein Walzgerüst einer Fertigstraße trainiert.

In besonders vorteilhafter Ausgestaltung der Erfindung wird das neuronale Netz mit Werten für die Walzkraft und Werten für die unterschiedlichen Betriebsbedingungen für Walzgerüste von Walzstraßen unterschiedlicher Walzwerke trainiert. Dies führt zu einer besonders präzisen Bestimmung der Walzkraft in einem Walzgerüst, obwohl zum Training Walzgerüste anderer Walzwerke, d.h. also unterschiedliche Anlagen, herangezogen werden.

In weiterhin vorteilhafter Ausgestaltung der Erfindung wird das neuronale Netz mit Werten für die Walzkraft und Werten für die unterschiedlichen Betriebsbedingungen für Walzgerüste von Walzstraßen zumindest fünf unterschiedlicher Walzwerke trainiert. Auf diese Weise läßt sich die Präzision bei der Bestimmung der Walzkraft weiter erhöhen.

In weiterhin vorteilhafter Ausgestaltung der Erfindung wird mittels des neuronalen Netzes ein Korrekturwert zur, insbesondere multiplikativen, Korrektur eines mittels eines analytischen Walzkraftmodells ermittelten Wertes für die Walzkraft ermittelt. Die Verknüpfung von analytischen Modellen und neuronalen Netzen ist z.B. in der DE 43 38 607 A1,
DE 43 38 608 A1 und der DE 43 38 615 A1 offenbart. Insbesondere eine Struktur gemäß der DE 43 38 607 A1 hat sich in Verbindung mit einer multiplikativen Verbindung als besonders vorteilhaft erwiesen.

In weiterhin vorteilhafter Ausgestaltung der Erfindung wird ein gerüstspezifischer Korrekturwert zur Korrektur des mittels des analytischen Walzkraftmodells ermittelten Wertes für die Walzkraft mittels eines als neuronales Netz ausgebildeten Gerüstnetzes in Abhängigkeit von physikalischen Eigenschaften des zu walzenden metallischen Walzguts (z.B. die Breite des mittels des Walzgerüsts zu walzenden metallischen Walzguts vor Einlauf in das Walzgerüst, die Dicke des metallischen Walzguts vor Eintritt in das Walzgerüst, die relative Dickenreduktion des metallischen Walzguts im Walzgerüst, die Temperatur des metallischen Walzguts bei Eintritt in das Walzgerüst, der Zug im metallischen Walzgut vor dem Walzgerüst, der Zug im metallischen Walzgut hinter dem Walzgerüst sowie der Radius der Arbeitswalzen des Walzgerüstes) und von physikalischen Eigenschaften des Walzgerüstes (z.B. das Elastizitätsmodul der Walzen) ermittelt.

In weiterhin vorteilhafter Ausgestaltung der Erfindung wird ein chemiespezifischer Korrekturwert zur Korrektur des mittels des analytischen Walzkraftmodells ermittelten Wertes für die Walzkraft mittels eines als neuronales Netz ausgebildeten Chemienetzes in Abhängigkeit von chemischen Eigenschaften des zu walzenden metallischen Walzguts (z.B. die Anteile von Eisen, Kohlenstoff, Silicium, Mangan, Phosphor, Schwefel, Aluminium, Chrom, Kupfer, Molybdän, Titan, Nickel, Vanadium, Niob, Stickstoff, Bor und/oder Zinn im metallischen Walzgut) ermittelt. Diese Unterteilung in einen gerüstspezifischen und einen chemiespezifischen Korrekturwert führt im Zusammenhang mit der Erfindung zu einer weiterhin verbesserten Genauigkeit bei der Bestimmung der Walzkraft.

Zu einer signifikanten Verbesserung der Genauigkeit bei der Bestimmung der Walzkraft kommt es unter bestimmten Betriebsbedingungen des Walzgerüstes, wenn - insbesondere in Verbindung mit der Erfindung - ein gefügespezifischer Korrekturwert zur Korrektur des mittels des analytischen Walzkraftmodells ermittelten Wertes für die Walzkraft mittels eines als neuronales Netz ausgebildeten Gefügenetzes in Abhängigkeit von chemischen Eigenschaften des zu walzenden metallischen Walzguts und der Temperatur des zu walzenden metallischen Walzguts ermittelt wird. Chemische Eigenschaften sind dabei z.B. die Anteile von Eisen, Kohlenstoff, Silicium, Mangan, Phosphor, Schwefel, Aluminium, Chrom, Kupfer, Molybdän, Titan, Nickel, Vanadium, Niob, Stickstoff, Bor und/oder Zinn im metallischen Walzgut. Dies gilt insbesondere, wenn zwischen einem gerüstspezifischen, einem chemiespezifischen und einem gefügespezifischen Korrekturwert unterschieden wird.

In weiterhin vorteilhafter Ausgestaltung der Erfindung wird der Korrekturwert zumindest eines neuronalen Netzes mit einem Vertrauenswert multipliziert, wobei der Vertrauenswert ein statistisches Maß für die Zuverlässigkeit des Korrekturwertes bildet. Der Vertrauenswert liegt vorteilhafterweise zwischen 0 und 1.

In praktischer Realisierung der Erfindung erfolgt die Bestimmung der Walzkraft mittels zumindest zweier neuronaler Netze, deren Ausgangswerte verknüpft werden.

Die Erfindung kommt besonders vorteilhaft bei der Voreinstellung einer Walzstraße zum Einsatz. Dabei wird die zu erwartende Walzkraft zum Walzen des metallischen Walzguts vorab bestimmt und vor Einlaufen des metallischen Walzguts in die Walzstraße zur Voreinstellung der Walzstraße, d.h. z.B. zum Einstellen der Walzspalte an den Walzgerüsten, verwendet.

Weitere Vorteile und Einzelheiten ergeben sich aus der nachfolgenden Beschreibung von Ausführungsbeispielen. Die Ausführungsbeispiele betreffen das Walzen von Stahl. Unter entsprechender Anpassung können auch andere Metalle, insbesondere Aluminium, gewalzt werden. Im einzelnen zeigen:
- FIG 1: ein Walzkraftmodell,
- FIG 2: ein erstes vorteilhaftes Walzkraftmodell,
- FIG 3: ein anderes vorteilhaftes Walzkraftmodell,
- FIG 4: eine Korrektur zur Verknüpfung neuronaler Netze,
- FIG 5: eine Wichtungsstruktur für ein neuronales Netz,
- FIG 6: ein Lernverfahren für ein neuronales Netz,
- FIG 7: eine Modifizierung des Lernverfahrens von FIG 6,
- FIG 8: eine Korrektur für ein Walzkraftmodell und
- FIG 9: eine online-Adaption einer Korrektur entsprechend Figur 8.

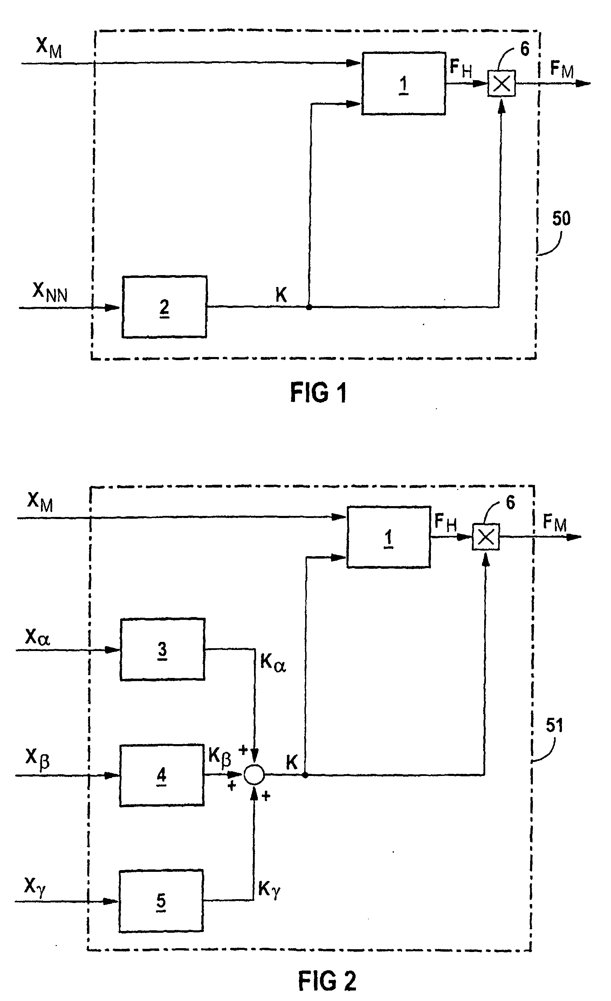

FIG 1 zeigt ein Walzkraftmodell 50 zur Bestimmung der Walzkraft F_{H} in einem Walzgerüst. Das Walzkraftmodell 50 weist ein analytisches Modell 1 sowie ein neuronales Netz 2 auf.

In das analytische Walzkraftmodell 1 gehen Eingangsgrößen X_{M} und optional ein Korrekturwert k ein. Die Eingangsgrößen X_{M} des analytischen Walzkraftmodells 1 sind in beispielhafter Ausgestaltung das Elastizitätsmodul der Walzen des Walzgerüstes, die Breite des mittels des Walzgerüsts zu walzenden Stahls vor Einlauf in das Walzgerüst, die Dicke des Stahls vor Eintritt in das Walzgerüst, die relative Dickenreduktion des Stahls im Walzgerüst, die Temperatur des Stahls bei Eintritt in das Walzgerüst, der Zug im Stahl vor dem Walzgerüst, der Zug im Stahl hinter dem Walzgerüst sowie der Radius der Arbeitswalzen des Walzgerüstes. Das analytische Walzkraftmodell 1 liefert als Ausgangsgröße einen Grobwert F_{M} für die Walzkraft, der mittels eines Multiplikators 6 mit dem Korrekturwert k multipliziert wird und somit einen Wert F_{H} für die Walzkraft liefert, der Ausgangsgröße des Walzkraftmodells 50 ist.

Der Korrekturwert k wird mittels des neuronalen Netzes 2 in Abhängigkeit von dessen Eingangsgrößen X_{NN} ermittelt. Die Eingangsgrößen X_{NN} des neuronalen Netzes 2 umfassen in beispielhafter Ausgestaltung die Breite des mittels des Walzgerüsts zu walzenden Stahls vor Einlauf in das Walzgerüst, die Dicke des Stahls vor Eintritt in das Walzgerüst, die relative Dickenreduktion des Stahls im Walzgerüst, die Temperatur des Stahls bei Eintritt in das Walzgerüst, den Zug im Stahl vor dem Walzgerüst, den Zug im Stahl nach dem Walzgerüst, den Radius der Arbeitswalzen des Walzgerüstes, die Umfangsgeschwindigkeit der Arbeitswalzen des Walzgerüstes, den Anteil von Kohlenstoff und vorteilhafterweise den Anteil von Silicium im Stahl. Es ist weiterhin vorteilhaft, wenn die Eingangsgrößen X_{NN} des neuronalen Netzes 2 außerdem die Anteile von Mangan, Phosphor, Schwefel, Aluminium, Chrom, Kupfer, Molybdän, Titan, Nickel, Vanadium, Niob, Stickstoff, Bor und/oder Zinn im Stahl umfassen.

FIG 2 zeigt ein besonders vorteilhaftes Ausführungsbeispiel für ein Walzkraftmodell. Dieses mit Bezugszeichen 51 bezeichnete Walzkraftmodell weist wie das Walzkraftmodell 50 in FIG 1 ein analytisches Walzkraftmodell 1 sowie einen Multiplikator 6 auf. Das neuronale Netz 2 in FIG 1 ist dagegen durch drei neuronale Netze 3, 4, 5 ersetzt, deren Ausgänge k_{α}, k_{β} und k_{γ} zu dem Korrekturfaktor k addiert werden.

Bezugszeichen 3 kennzeichnet ein als Chemienetz bezeichnetes neuronales Netz, das einen chemiespezifischen Korrekturwert k_{α} in Abhängigkeit von seinen Eingangsgrößen X_{α} ermittelt.
Die Eingangsgrößen X_{α} umfassen vorteilhafterweise den Anteil von Kohlenstoff in Stahl sowie vorteilhafterweise den Anteil von Silicium im Stahl. Es ist ferner vorteilhaft, wenn die Eingangsgrößen X_{α} des neuronalen Netzes 2 außerdem die Anteile von Mangan, Phosphor, Schwefel, Aluminium, Chrom, Kupfer, Molybdän, Titan, Nickel, Vanadium, Niob, Stickstoff, Bor und/oder Zinn im Stahl umfassen.

Bezugszeichen 4 kennzeichnet ein als Gefügenetz bezeichnetes neuronales Netz, das einen gefügespezifischen Korrekturwert k_{β} in Abhängigkeit von seinen Eingangsgrößen X_{β} ermittelt. Die Eingangsgrößen X_{β} umfassen vorteilhafterweise die Temperatur des Stahls bei Einlauf in das Walzgerüst und die Anteile von Kohlenstoff im Stahl sowie vorteilhafterweise den Anteil von Silicium im Stahl. Es ist ferner vorteilhaft, wenn die Eingangsgrößen X_{β} des neuronalen Netzes 2 außerdem den Anteile von Mangan, Phosphor, Schwefel, Aluminium, Chrom, Kupfer, Molybdän, Titan, Nickel, Vanadium, Niob, Stickstoff, Bor und/oder Zinn im Stahl umfassen.

Bezugszeichen 5 kann ein als Gerüstnetz bezeichnetes neuronales Netz, das einen gerüstspezifischen Korrekturwert k_{γ} in Abhängigkeit von seinen Eingangsgrößen X_{γ} berechnet. Die Eingangsgrößen X_{γ} umfassen vorteilhafterweise die Breite des mittels des Walzgerüsts zu walzenden Stahls vor Einlauf in das Walzgerüst, die Dicke des Stahls vor Eintritt in das Walzgerüst, die relative Dickenreduktion des Stahls im Walzgerüst, die Temperatur des Stahls bei Eintritt in das Walzgerüst, den Zug im Stahl vor dem Walzgerüst, den Zug im Stahl nach dem Walzgerüst sowie den Radius der Arbeitswalzen des Walzgerüstes.

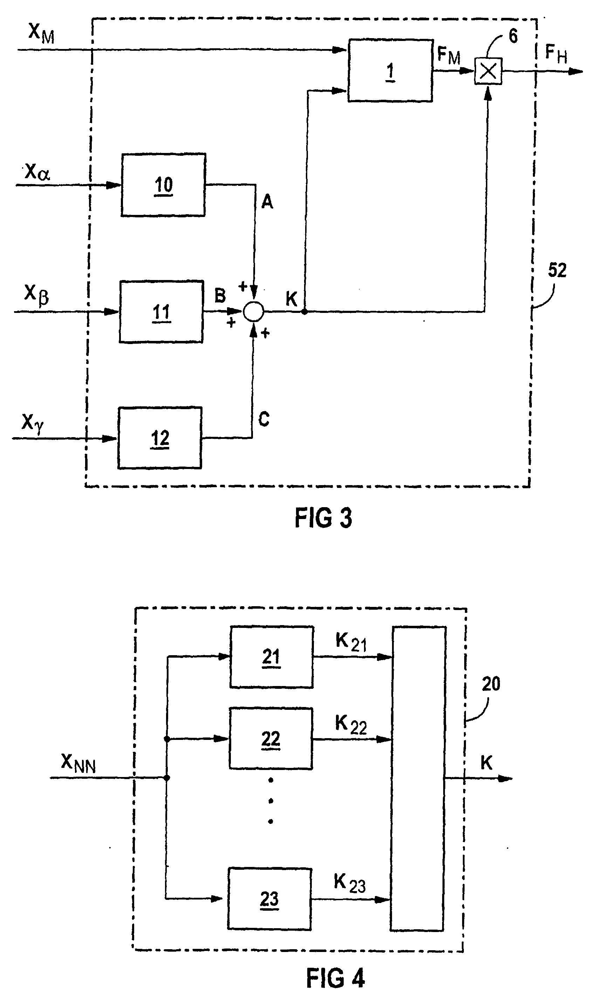

FIG 3 zeigt ein weiterhin besonders vorteilhaftes Ausführungsbeispiel für ein Walzkraftmodell. Dieses mit Bezugszeichen 52 bezeichnete Walzkraftmodell weist ebenfalls ein analytisches Walzkraftmodell 1 sowie einen Multiplikator 6 auf. Gemäß diesem Ausführungsbeispiel ist das Chemienetz 3 des Walzkraftmodells 51 im Walzkraftmodell 52 durch einen Chemiekorrekturblock 10 ersetzt. Das Gefügenetz 4 des Walzkraftmodells 51 ist im Walzkraftmodell 52 durch einen Gefügekorrekturblock 11 ersetzt. Das Gerüstnetz 5 des Walzkraftmodells 51 ist im Walzkraftmodell 52 durch einen Gerüstkorrekturblock 12 ersetzt. Ausgangsgrößen des Chemiekorrekturblocks, des Gefügekorrekturblocks und des Gerüstkorrekturblocks sind mit A, B und C bezeichnet. Die Summe dieser Ausgangsgrößen bildet den Korrekturwert k.

FIG 4 zeigt einen Korrekturblock 20, dessen Eingangsgrößen die Größen X_{NN} sind und dessen Ausgangsgröße der Korrekturwert k ist. Der Korrekturblock 20 weist neuronale Netze 21, 22, 23 sowie einen Verknüpfungsblock 24 auf. Ausgangsgrößen der neuronalen Netze sind Korrekturwerte k₂₁, k₂₂ und k₂₃, die mittels des Verknüpfungsblockes 24 zum Korrekturwert k verknüpft werden. Dazu bildet der Verknüpfungsblock 24 vorteilhafterweise die Mittelwerte der Korrekturwerte k₂₁, k₂₂ und k₂₃ und gibt diesen Mittelwert als Korrekturwert k aus. Die neuronalen Netze 21, 22, 23 haben die gleiche Funktionalität.

Sie sind jedoch neuronale Netze mit unterschiedlicher Struktur, d.h. neuronale Netze mit einer unterschiedlichen Anzahl von Knoten und/oder neuronale Netze, die unterschiedlichen Trainingsmethoden unterworfen werden.

Der Korrekturblock 20 ersetzt das neuronale Netz 2 in FIG 1. Es ist weiterhin besonders möglich, den Chemiekorrekturblock 10, den Gefügekorrekturblock 11 sowie den Gerüstkorrekturblock 12 durch je einen Korrekturblock 20 zu ersetzen. Entsprechend sind dann für den Korrekturblock 20 X_{NN} und k durch X_{α} und A, X_{β} und B bzw. X_{γ} und C zu ersetzen.

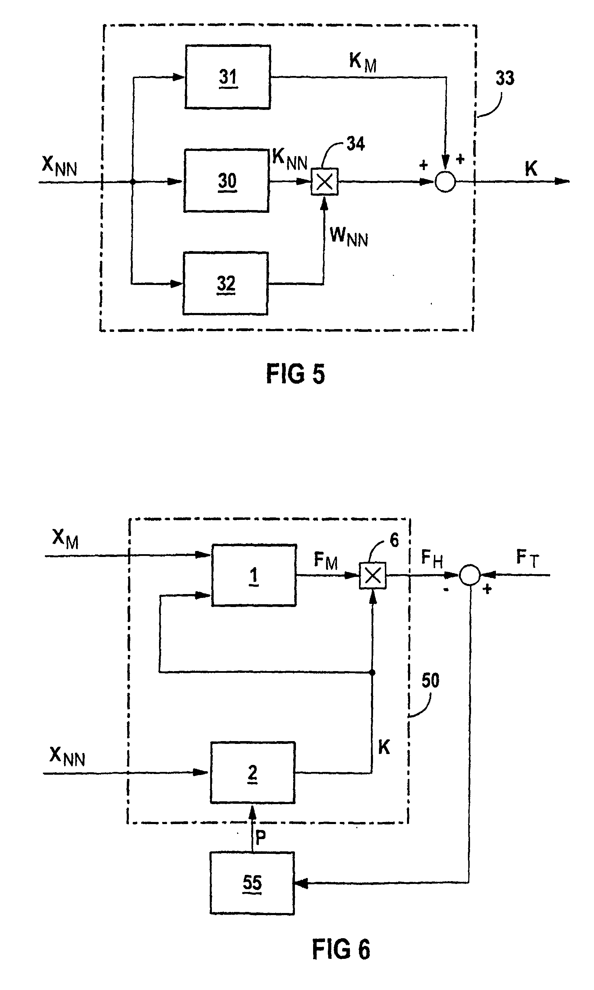

FIG 5 zeigt einen Wichtungskorrekturblock 33, dessen Eingangsgrößen die Größen X_{NN} sind und dessen Ausgangsgröße der Korrekturwert k ist. Der Wichtungskorrekturblock 33 weist ein neuronales Netz 30, ein Regressionsmodell 31, einen Wichtungsblock 32 sowie einen Multiplikator 34 auf. Ausgangsgröße des Wichtungsblocks 32 ist ein Vertrauenswert W_{NN}, der Werte zwischen 0 und 1 annehmen kann. Der Vertrauenswert W_{NN} bildet ein statistisches Maß für die Zuverlässigkeit eines vom neuronalen Netz 30 ausgegebenen Korrekturwertes k_{NN}. Das Regressionsmodell 31 gibt ebenfalls einen Korrekturwert k_{M} aus. Der vom neuronalen Netz 30 ermittelte Korrekturwert k_{NN} wird mittels des Multiplikators 34 mit dem Vertrauenswert W_{NN} multipliziert. Zu dem Produkt aus k_{NN} und W_{NN} wird der mittels des Regressionsmodells 31 ermittelte Korrekturwert k_{M} hinzuaddiert. Diese Summe bildet den Korrekturwert k. Es ist vorteilhaft, das neuronale Netz 2 durch den Wichtungskorrekturblock 33 zu ersetzen.

Der Chemiekorrekturblock 10, der Gefügekorrekturblock 11 sowie den Gerüstkorrekturblock 12 können durch einen Wichtungskorrekturblock gemäß dem Wichtungskorrekturblock 33 ersetzt werden. Dabei sind X_{NN} und k durch X_{α} und k_{α}, X_{β} und k_{β} bzw. X_{γ} und k_{γ} zu ersetzen. Das neuronale Netz 30 kann durch den Korrekturblock 20 ersetzt werden. In diesem Fall ersetzt der Korrekturwert k in FIG 4 den Korrekturwert k_{NN} in FIG 5.

FIG 6 zeigt ein Lernverfahren für das neuronale Netz 2 aus FIG 1. Dazu wird der mittels des Walzkraftmodells 50 ermittelte Wert F_{H} für die Walzkraft von einem gemessenen Wert F_{T} für die tatsächliche Walzkraft abgezogen. Die Differenz wird dem Lernalgorithmus 55 zugeleitet, der die Parameter P des neuen Netzes 2 ermittelt. Dieses Verfahren ist entsprechend auf die neuronalen Netze 2, 3, 4, 5, 21, 22, 23 und 30 zu erweitern, wenn das Walzkraftmodell 50 entsprechend oben bezeichneten Ausführungen ergänzt bzw. ersetzt ist.

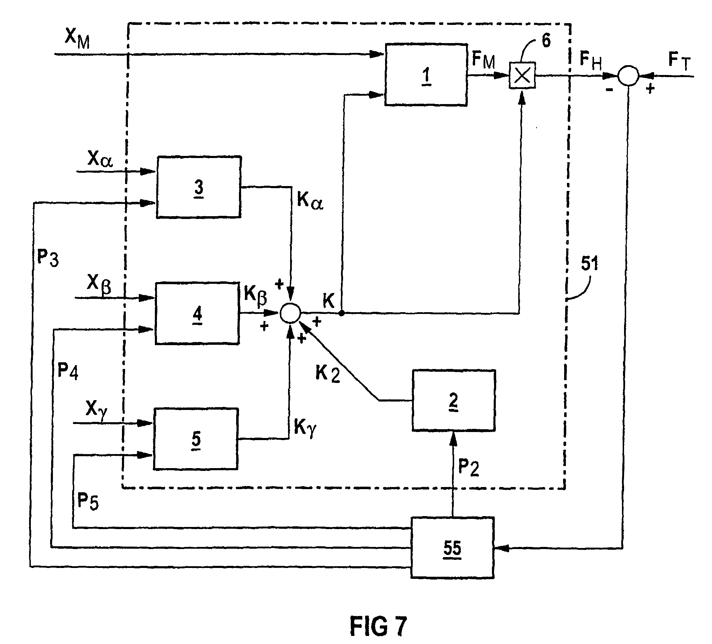

In Figur 7 ist das anhand Figur 6 beschriebene Lernverfahren insoweit modifiziert, daß die neuronalen Netze 3, 4, 5 und der Funktionsblock 2 aus FIG 1 dargestellt sind. Dazu wird der mittels des Walzkraftmodells 51 ermittelte Wert F_{H} für die Walzkraft von einem gemessenen Wert F_{T} für die tatsächliche Walzkraft abgezogen. Diese Differenz wird dem Lernalgorithmus 55 zugeleitet, der neue Parameter P₃, P₄, P₅ für die neuronalen Netze 3, 4, 5 oder entsprechende Korrekturfaktoren für die Parameter der neuronalen Netze 3, 4, 5 ermittelt. Ferner ermittelt der Lernalgorithmus 55 einen neuen Wert für den Korrekturwert k₂ oder einen Korrekturwert P₂ zur Korrektur des Korrekturwerts k₂.

Letzteres Vorgehen findet entsprechende Anwendung für die neuronalen Netze in den Korrekturblöcken 10, 11 und 12 sowie für die neuronalen Netze 21, 22, 23 und 30 in FIG 3, FIG 4 bzw. FIG 5.

Zum Trainieren der neuronalen Netze 2, 3, 4, 5, 21, 22, 23 und 30 werden die Daten X_{M} in X_{NN}, X_{α}, X_{β}, X_{γ} und F_{T} herangezogen, wobei diese Daten vorteilhafterweise von verschiedenen Walzwerken stammen.

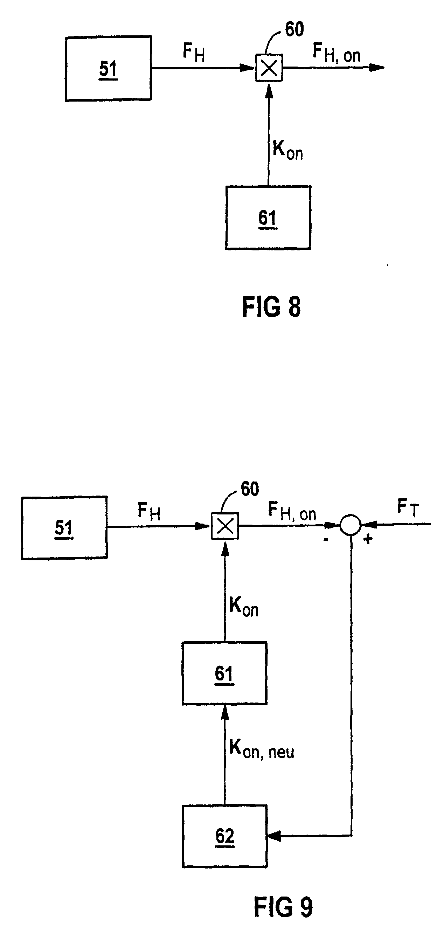

Es kann vorgesehen werden, das Gerüstnetz 5 nach Installation auf einer Anlage online weiterzutrainieren. Besonders vorteilhaft ist es jedoch, das Walzkraftmodell 51 bzw. 52 nach Implementierung auf einer Anlage in seinen Parametern unverändert zu lassen und zusätzlich eine Korrektur des Ausgangs F_{H} des Walzkraftmodells 51 bzw. des Walzkraftmodells 52 vorzusehen. Gemäß FIG 8 wird der Wert F_{H} mittels eines Multiplizierers mit einem Korrekturwert kₒₙ, der z.B. in einem Speicher 61 abgelegt ist, multipliziert. Statt einer Multiplikation kann auch eine andere Verknüpfung, z.B. eine Addition, vorgesehen werden. Das Produkt aus F_{H} und kₒₙ ist ein korrigierter Wert F_{H,on} für die Walzkraft.

Während die Parameter des Walzkraftmodells 51 bzw. 52 nach Implementierung auf der Anlage unverändert bleiben, kann der Korrekturfaktor kₒₙ online adaptiert werden, was in FIG 9 im einzelnen dargestellt ist. Dazu wird die Differenz zwischen F_{H,on} und einem gemessenen Wert F_{T} für die tatsächliche Walzkraft einem Lernalgorithmus 62 zugeführt. Mittels des Lernalgorithmus 62 wird ein neuer Korrekturwert k_{on,neu} ermittelt, der den bisherigen Korrekturwert kₒₙ ersetzt.

## Patentansprüche

1. Verfahren zur Bestimmung der Walzkraft (F_{H}) in einem Walzgerüst zum Walzen von metallischen Walzgut, wobei die Bestimmung der Walzkraft (F_{H}) mittels zumindest eines neuronalen Netzes (2, 3, 4, 5, 21, 22, 23, 30) erfolgt, das mit, insbesondere gemessenen, Werten (F_{T}) für die Walzkraft (F_{H}) unter unterschiedlichen Betriebsbedingungen im Sinne einer Verbesserung bei der Bestimmung der Walzkraft (F_{H}) trainiert wird,
**dadurch gekennzeichnet,**
**daß** das neuronale Netz (2, 3, 4, 5, 21, 22, 23, 30) mit Werten (F_{T}) für die Walzkraft und Werten (X_{M}, X_{NN}, X_{α}, X_{β}, X_{γ}) für die unterschiedlichen Betriebsbedingungen für Walzgerüste unterschiedlicher Walzstraßen trainiert wird.

2. Verfahren nach Anspruch 1,
**dadurch gekennzeichnet,**
**daß** das neuronale Netz (2, 3, 4, 5, 21, 22, 23, 30) mit Werten (F_{T}) für die Walzkraft und Werten (X_{M}, X_{NN}, X_{α}, X_{β}, X_{γ}) für die unterschiedlichen Betriebsbedingungen für zumindest ein Walzgerüst aus einer Vorstraße und zumindest ein Walzgerüst einer Fertigstraße trainiert wird.

3. Verfahren nach Anspruch 1 oder 2,
**dadurch gekennzeichnet,**
**daß** das neuronale Netz (2, 3, 4, 5, 21, 22, 23, 30) mit Werten (F_{T}) für die Walzkraft und Werten (X_{M}, X_{NN}, X_{α}, X_{β}, X_{γ}) für die unterschiedlichen Betriebsbedingungen für Walzgerüste von Walzstraßen unterschiedlicher Walzwerke trainiert wird.

4. Verfahren nach Anspruch 3,
**dadurch gekennzeichnet,**
**daß** das neuronale Netz (2, 3, 4, 5, 21, 22, 23, 30) mit Werten (F_{T}) für die Walzkraft und Werten (X_{M}, X_{NN}, X_{α}, X_{β}, X_{γ}) für die unterschiedlichen Betriebsbedingungen für Walzgerüste von Walzstraßen zumindest fünf unterschiedlicher Walzwerke trainiert wird.

5. Verfahren nach Anspruch 1, 2, 3 oder 4,
**dadurch gekennzeichnet,**
**daß** mittels des neuronalen Netzes (2, 3, 4, 5, 21, 22, 23, 30) ein Korrekturwert (k, k_{α}, k_{β}, k_{γ}, k₂₁, k₂₂, k₂₃, k_{NN}) zur, insbesondere multiplikativen, Korrektur eines mittels eines analytischen Walzkraftmodells (1) ermittelten Wertes (F_{M}) für die Walzkraft ermittelt wird.

6. Verfahren nach Anspruch 5,
**dadurch gekennzeichnet,**
**daß** ein gerüstspezifischer Korrekturwert (k_{γ}) zur Korrektur des mittels des analytischen Walzkraftmodells (1) ermittelten Wertes (F_{M}) für die Walzkraft mittels eines als neuronales Netz ausgebildeten Gerüstnetzes (5) in Abhängigkeit von physikalischen Eigenschaften (X_{γ}) des zu walzenden metallischen Walzguts und des Walzgerüstes ermittelt wird.

7. Verfahren nach Anspruch 5,
**dadurch gekennzeichnet,**
**daß** ein chemiespezifischer Korrekturwert (k_{α}) zur Korrektur des mittels des analytischen Walzkraftmodells (1) ermittelten Wertes (F_{M}) für die Walzkraft mittels eines als neuronales Netz ausgebildeten Chemienetzes (3) in Abhängigkeit von chemischen Eigenschaften (X_{α}) des zu walzenden metallischen Walzguts ermittelt wird.

8. Verfahren nach Anspruch 5,
**dadurch gekennzeichnet,**
**daß** ein gefügespezifischer Korrekturwert (k_{β}) zur Korrektur des mittels des analytischen Walzkraftmodells (1) ermittelten Wertes (F_{M}) für die Walzkraft mittels eines als neuronales Netz ausgebildeten Gefügenetzes (4) in Abhängigkeit von chemischen Eigenschaften des zu walzenden metallischen Walzguts und der Temperatur des zu walzenden metallischen Walzguts ermittelt wird.

9. Verfahren nach Anspruch 5 oder einem der Ansprüche 6 bis 8,
**dadurch gekennzeichnet,**
**daß** der Korrekturwert (k_{NN}) mit einem Vertrauenswert (W_{NN}) multipliziert wird, wobei der Vertrauenswert (W_{NN}) ein statistisches Maß für die Zuverlässigkeit des Korrekturwertes (k_{NN}) bildet.

10. Verfahren nach einem der vorhergehenden Ansprüche,
**dadurch gekennzeichnet,**
**daß** die Bestimmung der Walzkraft mittels zumindest zweier neuronaler Netze erfolgt, deren.Ausgangswerte verknüpft werden.

11. Verfahren zur Voreinstellung einer Walzstraße in Abhängigkeit der beim Walzen zu erwartenden Walzkraft, wobei die zu erwartende Walzkraft (F_{H}) gemäß einem Verfahren nach einem der vorhergehenden Ansprüche mittels zumindest eines neuronalen Netzes (2, 3, 4, 5, 21, 22, 23, 30) bestimmt wird, das mit Werten für die Walzkraft (F_{T}) unter unterschiedlichen Betriebsbedingungen im Sinne einer Verbesserung bei der Bestimmung der Walzkraft trainiert wird,
**dadurch gekennzeichnet,**
**daß** das neuronale Netz (2, 3, 4, 5, 21, 22, 23, 30) mit Werten (F_{T}) für die Walzkraft und Werten (X_{M}, X_{NN}, X_{α}, X_{β}, X_{γ}) für die unterschiedlichen Betriebsbedingungen für Walzgerüste unterschiedlicher Walzstraßen trainiert wird.

12. Verfahren nach einem der vorangehenden Ansprüche,
**dadurch gekennzeichnet,**
**daß** die Bestimmung der Walzkraft (F_{H}) mittels zumindest eines als neuronales Netz ausgebildeten Gefügenetzes (4) in Abhängigkeit von chemischen Eigenschaften und der Temperatur des zu walzenden metal-lischen Walzgutes mittels zumindest eines als neuronales Netz ausgebildeten Gerüstnetzes (5) in Abhängigkeit von physikalischen Eigenschaften (X_{γ}) des zu walzenden metallischen Walzgutes und des Walzgerüstes sowie mittels zes (3) in Abhängigkeit von chemischen Eigenschaften (X_{α}) des zu walzenden metallischen Walzgutes ermittelt wird.

13. Einrichtung zur Bestimmung der Walzkraft (F_{H}) in einem Walzgerüst zum Walzen von metallischem Walzgut gemäß einem Verfahren nach einem der vorhergehenden Ansprüche, wobei die Einrichtung zur Bestimmung der Walzkraft zumindest ein mit Werten für die Walzkraft (F_{T}) unter unterschiedlichen Betriebsbedingungen trainiertes neuronales Netz (2, 3, 4, 5, 21, 22, 23, 30) aufweist,
**dadurch gekennzeichnet,**
**daß** das neuronale Netz (2, 3, 4, 5, 21, 22, 23, 30) ein mit Werten für die Walzkraft (F_{T}) und Werten (X_{M}, X_{NN}, X_{α}, X_{β}, X_{γ}) für die unterschiedlichen Betriebsbedingungen für Walzgerüste unterschiedlicher Walzstraßen trainiertes neuronales Netz ist.

14. Einrichtung nach Anspruch 13,
**dadurch gekennzeichnet,**
**daß** als neuronales Netz ein Gefügenetz (4) in Abhängigkeit von chemischen Eigenschaften und der Temperatur des zu walzenden metallischen Walzgutes ein Gerüstnetz (5) in Abhängigkeit von physikalischen Eigenschaften (X_{γ}) des zu walzenden metallischen Walzgutes und des Walzgerüstes sowie ein Chemienetz (3) in Abhängigkeit von chemischen Eigenschaften (X_{α}) des zu walzenden metallischen Walzgutes vorhanden sind.

## Claims

1. Method for determining the rolling force (F_{H}) in a roll stand for rolling metallic material to be rolled, the rolling force (F_{H}) being determined by means of at least one neural network (2, 3, 4, 5, 21, 22, 23, 30), which is trained using, in particular measured, values (F_{T}) for the rolling force (F_{H}) under different operating conditions with a view to improving the determination of the rolling force (F_{H}), **characterized in that** the neural network (2, 3, 4, 5, 21, 22, 23, 30) is trained using values (F_{T}) for the rolling force and values (X_{M}, X_{NN}, X_{α}, X_{β}, X_{γ}) for the different operating conditions for roll stands of different rolling trains.

2. Method according to Claim 1, **characterized in that** the neural network (2, 3, 4, 5, 21, 22, 23, 30) is trained using values (F_{T}) for the rolling force and values (X_{M}, X_{NN}, X_{α}, X_{β}, X_{γ}) for the different operating conditions for at least one roll stand from a roughing train and at least one roll stand from a finishing train.

3. Method according to Claim 1 or 2, **characterized in that** the neural network (2, 3, 4, 5, 21, 22, 23, 30) is trained using values (F_{T}) for the rolling force and values (X_{M}, X_{NN}, X_{α}, X_{β}, X_{γ}) for the different operating conditions for roll stands of rolling trains of different rolling mills.

4. Method according to Claim 3, **characterized in that** the neural network (2, 3, 4, 5, 21, 22, 23, 30) is trained using values (F_{T}) for the roll-ing force and values (X_{M}, X_{NN}, X_{α}, X_{β}, X_{γ}) for the different operating conditions for roll stands of rolling trains of at least five different rolling mills.

5. Method according to Claim 1, 2, 3 or 4, **characterized in that** the neural network (2, 3, 4, 5, 21, 22, 23, 30) is used to determine a correction value (k, k_{α} k_{β} k_{γ} k₂₁, k₂₂, k₂₃, k_{NN}) for correction, in particular by multiplication, of a value (F_{M}) for the rolling force which is determined by means of an analytical rolling-force model (1).

6. Method according to Claim 5, **characterized in that** a stand-specific correction value (k_{γ}) for correcting the value (F_{M}) for the rolling force which is determined by means of the analytical rolling-force model (1) is determined by means of a stand network (5), which is in the form of a neural network, as a function of physical properties (X_{γ}) of the metallic material which is to be rolled and of the roll stand.

7. Method according to Claim 5, **characterized in that** a chemistry-specific correction value (k_{α}) for correction of the value (F_{M}) for the rolling force which is determined by means of the analytical rolling-force model (1) is determined by means of a chemistry network (3), which is in the form of a neural network, as a function of chemical properties (X_{α}) of the metallic material which is to be rolled.

8. Method according to Claim 5, **characterized in that** a microstructure-specific correction value (k_{β}) for correction of the value (F_{M}) for the rolling force which is determined by means of the analytical rolling-force model (1) is determined by means of a microstructure network (4), which is in the form of a neural network, as a function of chemical properties of the metallic material which is to be rolled and the temperature of the metallic material which is to be rolled.

9. Method according to Claim 5 or one of Claims 6 to 8, **characterized in that** the correction value (k_{NN}) is multiplied by a confidence value (W_{NN}), the confidence value (W_{NN}) forming a statistical measure for the reliability of the correction value (k_{NN}).

10. Method according to one of the preceding claims, **characterized in that** the rolling force is determined by means of at least two neural networks, the output values of which are linked.

11. Method for presetting a rolling train as a function of the rolling force which is to be expected during rolling, the expected rolling force (F_{H}) being determined using Method according to one of the preceding claims by means of at least one neural network (2, 3, 4, 5, 21, 22, 23, 30) which is trained using values for the rolling force (F_{T}) under different operating conditions with a view to improving the determination of the rolling force, **characterized in that** the neural network (2, 3, 4, 5, 21, 22, 23, 30) is trained using values (F_{T}) for the rolling force and values (X_{M}, X_{NN}, X_{α}, X_{β}, X_{γ}) for the different operating conditions for roll stands of different rolling trains.

12. Method according to one of the preceding claims, **characterized in that** the rolling force (F_{H}) is determined by means of at least one microstructure network (4), which is in the form of a neural network, as a function of chemical properties and the temperature of the metallic material which is to be rolled, by means of at least one stand network (5), which is in the form of a neural network, as a function of physical properties (X_{γ}) of the metallic material which is to be rolled and of the roll stand, and by means of [lacuna] network, as a function of chemical properties (X_{α}) of the metallic material which is to be rolled.

13. Device for determining the rolling force (F_{H}) in a roll stand for rolling metallic material to be rolled using the method according to one of the preceding claims, the device for determining the rolling force having at least one neural network (2, 3, 4, 5, 21, 22, 23, 30) which is trained using values for the rolling force (F_{T}) under different operating conditions, **characterized in that** the neural network (2, 3, 4, 5, 21, 22, 23, 30) is a neural network which is trained using values for the rolling force (F_{T}) and values (X_{M}, X_{NN}, X_{α}, X_{β}, X_{γ}) for the different operating conditions for rolling stands of different roll trains.

14. Device according to Claim 13, **characterized in that** a microstructure network (4), which is dependent on chemical properties and the temperature of the metallic material which is to be rolled, a stand network (5) which is dependent on physical properties (X_{γ}) of the metallic material which is to be rolled and of the roll stand, and a chemistry network (3), which is dependent on chemical properties (X_{α}) of the metallic material which is to be rolled, are present as neural networks.

## Revendications

1. Procédé pour déterminer la force de laminage (F_{H}) dans une cage de laminoir pour le laminage de matières métalliques à laminer, la détermination de la force de laminage (F_{H}) s'effectuant au moyen d'au moins un réseau neuronal (2, 3, 4, 5, 21, 22, 23, 30) qui subit un apprentissage avec des valeurs (F_{T}), notamment mesurées, pour la force de laminage (F_{H}) dans différentes conditions d'exploitation en vue d'une amélioration lors de la détermination de la force de laminage (F_{H}),
**caractérisé par le fait que** le réseau neuronal (2, 3, 4, 5, 21, 22, 23, 30) subit un apprentissage avec des valeurs (F_{T}) pour la force de laminage et avec des valeurs (X_{M}, X_{NN}, X_{α}, X_{β}, X_{γ}) pour les différentes conditions d'exploitation pour des cages de laminoir de différents trains de laminage.

2. Procédé selon la revendication 1,
**caractérisé par le fait que** le réseau neuronal (2, 3, 4, 5, 21, 22, 23, 30) subit un apprentissage avec des valeurs (F_{T}) pour la force de laminage et avec des valeurs (X_{M}, X_{NN}, X_{α}, X_{β}, X_{γ}) pour les différentes conditions d'exploitation pour au moins une cage de laminoir d'un train ébaucheur et pour au moins une cage de laminoir d'un train finisseur.

3. Procédé selon la revendication 1 ou 2,
**caractérisé par le fait que** le réseau neuronal (2, 3, 4, 5, 21, 22, 23, 30) subit un apprentissage avec des valeurs (F_{T}) pour la force de laminage et avec des valeurs (X_{M}, X_{NN}, X_{α}, X_{β}, X_{γ}) pour les différentes conditions d'exploitation pour des cages de laminoir de trains de laminage de différents laminoirs.

4. Procédé selon la revendication 3,
**caractérisé par le fait que** le réseau neuronal (2, 3, 4, 5, 21, 22, 23, 30) subit un apprentissage avec des valeurs (F_{T}) pour la force de laminage et avec des valeurs (X_{M}, X_{NN}, X_{α}, X_{β}, X_{γ}) pour les différentes conditions d'exploitation pour des cages de laminoir de trains de laminage d'au moins cinq laminoirs différents.

5. Procédé selon la revendication 1, 2, 3 ou 4,
**caractérisé par le fait que**, au moyen du réseau neuronal (2, 3, 4, 5, 21, 22, 23, 30), on détermine une valeur correctrice (k, k_{α}, k_{β}, k_{γ}, k₂₁, k₂₂, k₂₃, k_{NN}) pour la correction, notamment multiplicative, d'une valeur (F_{M}) déterminée au moyen d'un modèle de force de laminage analytique (1) pour la force de laminage.

6. Procédé selon la revendication 5,
**caractérisé par le fait qu'**on détermine une valeur correctrice (k_{γ}) spécifique à la cage pour la correction de la valeur (F_{M}), déterminée au moyen du modèle de force de laminage analytique (1), pour la force de laminage au moyen d'un réseau cage (5) conçu comme un réseau neuronal et en fonction de propriétés physiques (X_{γ}) du métal à laminer et de la cage de laminoir.

7. Procédé selon la revendication 5,
**caractérisé par le fait qu'**on détermine une valeur correctrice (k_{α}) spécifique à la chimie pour la correction de la valeur (F_{M}), déterminée au moyen du modèle de force de laminage analytique (1), pour la force de laminage au moyen d'un réseau chimie (3) conçu comme un réseau neuronal et en fonction de propriétés chimiques (X_{α}) du métal à laminer.

8. Procédé selon la revendication 5,
**caractérisé par le fait qu'**on détermine une valeur correctrice (k_{β}) spécifique à la structure pour la correction de la valeur (F_{M}), déterminée au moyen du modèle de force de laminage analytique (1), pour la force de laminage au moyen d'un réseau structure (4) conçu comme un réseau neuronal et en fonction de propriétés chimiques du métal à laminer et de la température du métal à laminer.

9. Procédé selon la revendication 5 ou l'une des revendications 6 à 8,
**caractérisé par le fait qu'**on multiplie la valeur correctrice (k_{NN}) par une valeur de confiance (W_{NN}), la valeur de confiance (W_{NN}) constituant une mesure statistique pour la fiabilité de la valeur correctrice (k_{NN}).

10. Procédé selon l'une des revendications précédentes,
**caractérisé par le fait que** la détermination de la force de laminage s'effectue au moyen d'au moins deux réseaux neuronaux dont les valeurs de sortie sont combinées.

11. Procédé pour le préréglage d'un train de laminage en fonction de la force de laminage escomptée lors du laminage, la force de laminage escomptée (F_{H}) étant déterminée selon un procédé selon l'une des revendications précédentes au moyen d'au moins un réseau neuronal (2, 3, 4, 5, 21, 22, 23, 30) qui subit un apprentissage avec des valeurs pour la force de laminage (F_{T}) dans différentes conditions d'exploitation en vue d'une amélioration lors de la détermination de la force de laminage,
**caractérisé par le fait que** le réseau neuronal (2, 3, 4, 5, 21, 22, 23, 30) subit un apprentissage avec des valeurs (F_{T}) pour la force de laminage et avec des valeurs (X_{M}, X_{NN}, X_{α}, X_{β}, X_{γ}) pour les différentes conditions d'exploitation pour des cages de laminoir de différents trains de laminage.

12. Procédé selon l'une des revendications précédentes,
**caractérisé par le fait que** la détermination de la force de laminage (F_{H}) s'effectue au moyen d'au moins un réseau structure (4) conçu comme un réseau neuronal et en fonction de propriétés chimiques et de la température du métal à laminer, au moyen d'au moins un réseau cage (5) conçu comme un réseau neuronal et en fonction de propriétés physiques (X_{γ}) du métal à laminer et de la cage de laminoir ainsi qu'au moyen d'un réseau chimie (3) conçu comme un réseau neuronal et en fonction de propriétés chimiques (X_{α}) du métal à laminer.

13. Dispositif pour la détermination de la force de laminage (F_{H}) dans une cage de laminoir pour le laminage de métal à laminer selon un procédé selon l'une des revendications précédentes, le dispositif pour la détermination de la force de laminage comportant au moins un réseau neuronal (2, 3, 4, 5, 21, 22, 23, 30) ayant subit un apprentissage avec des valeurs pour la force de laminage (F_{T}) dans différentes conditions d'exploitation,
**caractérisé par le fait que** le réseau neuronal (2, 3, 4, 5, 21, 22, 23, 30) est un réseau neuronal ayant subit un apprentissage avec des valeurs pour la force de laminage (F_{T}) et avec des valeurs (X_{M}, X_{NN}, X_{α}, X_{β}, X_{γ}) pour les différentes conditions d'exploitation pour des cages de laminoir de différents trains de laminage.

14. Dispositif selon la revendication 13,
**caractérisé par le fait qu'**il est prévu comme réseaux neuronaux un réseau structure (4) en fonction de propriétés chimiques et de la température du métal à laminer, un réseau cage (5) en fonction de propriétés physiques (X_{γ}) du métal à laminer et de la cage de laminoir ainsi qu'un réseau chimie (3) en fonction de propriétés chimiques (X_{α}) du métal à laminer.
